# NEW EUROPEAN PATENT SPECIFICATION

(11) **EP 0 226 112 B2**
(45) Date of publication and mention of the opposition decision: **01.07.1998**
(45) Mention of the grant of the patent: 06.06.1990
(21) Application number: 86116712.0
(22) Date of filing: 02.12.1986
(51) Int. Cl.: C08F 210/08

(54) **Highly amorphous olefin terpolymer**
Hochamorphes Olefin-Terpolymer
Terpolymère d'oléfines hautement amorphe

(30) Priority: 11.12.1985 US 807730
(43) Date of publication of application: 24.06.1987
(73) Proprietor: EASTMAN CHEMICAL COMPANY, Kingsport, TN 37660 (US)
(72) Inventor: Ames, William Albert, Longview, TX 75601 (US); Holliday, Robert Emmett, Longview, TX 75601 (US); Pearson, Neal, Longview, TX 75601 (US); Smith, Thomas William, Longview, TX 75601 (US)
(74) Representative: Behrens, Dieter, Dr.-Ing.

(56) References cited:
- EP-A- 0 023 249
- DE-A- 3 007 419

## Description

### Technical field

This invention relates to a process for producing highly amorphous olefin terpolymers from propylene, butene-1, and ethylene in which the ethylene units are incorporated in the polymer chain in a highly random manner.

### Background of the invention

U.S. Patent 3,923,758 describes a process for producing substantially hexane soluble propylene butene-1 copolymers containing 30 to 75 weight percent butene-1. The catalyst mixture is a triaikyl aluminum compound or an organopolylithiumaluminum compound and a titanium halide of the group consisting of HA-TiCl₃, A-TiCl₃, and AA-TiCl₃, as described in the patent. Temperatures range from 140°C to 250°C. Pressure range is from atmospheric to 13,780 kPa (12,000 psig) (140.6 kg/cm²). Products produced by the teachings of this patent are greater than 99 percent soluble in refluxing hexane, having a ring and ball softening point (RBSP) of about 78°C to about 120°C, and have a melt viscosity at 190°C of 0.1 to 100 mPa · s (100 to 100,000 cp). All the products described are copolymers. The only monomers used are propylene and butene-1.

U.S. Patent No. 4,309,522 described terpolymers of propylene, butene-1, and ethylene. These terpolymers are completely soluble in refluxing heptane. Since heptane is a higher boiling solvent than hexane, these materials are possibly less amorphous than those disclosed in U.S. Patent 3,923,758. The terpolymers of these patents have softening points of 90°C to 135°C, viscosities of 1 to 100 Pa · s (1,000 to 100,000 cp), and penetration values of 0.8 3.0 mm (8 to 30 dmm). They are produced in a process similar to that of U.S. Patent 3,923,758 except that the temperature range is 50°C to 100°C, the pressure is 500-2,000 kPa 172.5 to 290 psig) (5,1-20.4 kg/cm²), and the solvent is a mixture of butene-1, butene-2, and butane, or preferably is a C₄ fraction obtained from refinery cuts. The products described in this prior art patent are terpolymers of butene-1, propylene, and ethylene. The butene-1 charge is 25 to 76 percent by weight, propylene is 30 to 65 percent by weight and ethylene is 0.2 to 12 percent by weight The catalyst used is essentially the same as the catalyst systems described in U.S. Patent 3,923,758.

The products disclosed in U.S. Patent 3,923,758 do not contain ethylene. Those disclosed in U.S. Patent 4,309,522 contain propylene, butene-1, and ethylene, but differ from the present invention the manner in which the monomers are incorporated into the terpolymer chain. Terpolymers prepared according to teachings of the prior art shown clear evidence of polyethylene block formation in the infrared spectrum. The prior art compositions analyzed below their melting points show a doublet at 719 and 729 cm⁻¹ in the infrared spectrum. This is substantial evidence of ethylene blocking in the terpolymer. In contrast, terpolymers produced by the process of the current invention show only a singlet at 730 cm⁻¹ when examined in the solid state below the melting point. This is strong evidence for highly random incorporation of ethylene. That is, no length polyethylene segments are present in products produced by teachings of the current invention. This structure makes the polymers of this invention attractive in uses such as in hot melt adhesives, paper laminating agents, sealants and cable flooding compounds. The reason for a much greater degree of randomization of ethylene in products prepared by methods of the current invention is not completely understood but may result from the higher reaction temperatures employed in this process.

### Description of the invention

According to the present invention, there is provided a process for producing amorphous terpolymers comprising repeating units from about 0.1-10% by weight ethylene, about 50-78% by weight propylene and about 12-63% by weight butene-1, the terpolymer showing a singlet at about 730 cm⁻¹ when examined by infrared spectrum analysis, indicating a highly random distribution of ethylene units.

The products of the process are essentially completely amorphous. That is, they are greater than 99 percent soluble in boiling hexane. Melt viscosities at 190°C range from 0.1 to 100 mPa · s (100 to 100,000 cp) when measured by the Thermosel method. Ring and ball softening points (RBSP) range from about 75°C to 120°C. Glass transition temperatures ranging from about -20°C to about -35°C.

According to this invention, there is provided a process for producing said highly amorphous olefin terpolymer comprising continuously polymerizing a mixture of about 0.1-10% by weight ethylene, about 50-78% by weight propylene, and about 12-63% by weight butene-1, in the presence of a catalyst comprising an anionic coordination catalyst and in a solvent medium, at a temperature of about 140°C-250°C and at a pressure of about 689-34,475 kPa (100-5000 psig) (7-352 kg/cm²).

Suitable catalysts include anionic coordination types such as commercially available aluminum-reduced titanium trichloride activated by trituration (AA-TiCl₃), TiCl₄ supported on MgCl₂, and TiCl₃ supported on MgCl₂. Cocatalysts employed are typical aluminum alkyls such as aluminum triethyl (AIET₃) and aluminum triisobutyl.

Suitable solvents for the polymerization process include aliphatic hydrocarbons such as hexane, heptane, or cyclohexane and aromatic solvents such as toluene or mixed xylenes. A particularly preferred solvent is a petroleum fraction of an aliphatic hydrocarbon mixture having a boiling point range of about 180°C to about 220°C commonly referred to as mineral spirits. In some instances, especially where low viscosity amorphous material is being produced, only the small amount of solvent necessary to introduce the catalyst is required. That is, the solvent is essentially unreacted monomers and molten terpolymer.

Continuous operation is a greatly preferred process, since this yields the highest degree of random incorporation of the three monomers.

Suitable polymerization temperatures are 140°C to 250°C with 150°C to 180°C being the most preferred range. The suitable pressure range is 689-34,475 kPa (100 to 5,000 psig) (7-352 kg/cm²). The most preferred range is 5,170-13,790 kPa (750 to 2,000 psig) (52.7-140.6 kg/cm²).

Ethylene contents range from 0.1 to 10 percent as determined by material balances across the reactor. Above about 10% ethylene, some blocking is encountered because of the higher reactivity of the ethylene. Butene contents range from about 12 percent to 63 percent as determined by infrared spectrum data. Propylene contents range from 50 percent to 78 percent.

Since ethylene is many times more reactive than propylene and butene-1, it was completely unexpected that substantial amounts would be incorporated without ethylene blocking occurring. This is apparently one reason why compositions of this invention should be prepared by continuous polymerization techniques. As described previously, the terpolymers prepared according to this invention show no evidence of ethylene blocking even when as much as 10 weight percent ethylene is incorporated in the terpolymer.

The higher degree of random incorporation of ethylene in terpolymers obtained by the process of the present invention has its most dramatic effect on the RBSP. A terpolymer made according to the teachings of U.S. Patent 4,309,522 containing 59 percent propylene, 40 percent butene-1, and 1 percent ethylene has a RBSP of 125°C. A material of similar viscosity made by the present process containing 59.3 percent propylene, 38.4 percent butene-1 and 2.3 percent ethylene has a RBSP of only 93°C. Thus, this material is highly amorphous.

Even more unexpected is the effect of increasing the ethylene content on the butene-1 requirement to make a product having a given RBSP. Butene-1 is the most expensive of the three monomers. Any method to reduce the butene-1 requirement results in a lower manufacturing cost. A series of experiments was conducted to determine the effect of increasing the amount of ethylene incorporated on the butene-1 requirement. In these experiments, the target RBSP range was 93°C to 95°C and the viscosity at 190°C was 2 Pa · s (2,000 cp). Results are shown in the following table.

| % | | | |
|---|---|---|---|
| Ethylene | Butene-1 | Propylene | RBSP,°C |
| 0 | 51.8 | 48.2 | 94 |
| 2.3 | 38.4 | 59.3 | 93 |
| 4.6 | 30.8 | 64.4 | 94 |
| 8 | 20.5 | 71.5 | 95 |
| 9.8 | 14.5 | 75.5 | 94 |

Thus, by incorporating 9.8 percent ethylene into the terpolymer by this process, the butene requirement can be reduced from 51.8 percent for the copolymer to 14.5 percent for the terpolymer. This was completely unexpected since the ethylene content was increased only from 0 to 9.8 percent.

Terpolymers obtained by the process of the current invention are useful in the preparation of hot-melt adhesive compositions and as paper laminating agents. They are also useful as sealants. In addition, they can be used as cable flooding compounds (amorphous polymers placed in cables such as telephone cables to prevent water from seeping in and shorting out the electrical wires).

The process for producing the terpolymer is illustrated in the examples. Generally, the process consists of continuously charging the ethylene, propylene, and butene-1 in ratios to result in the specified quantities into a reactor. Also, catalytic quantities of the catalysts specified above, and solvent specified above are also continuously charged into the reactor. Molten terpolymer may act as solvent to an extent. Temperature in the reactor is maintained at about 140°C-250°C and pressure is maintained at about 68 g-34,475 kPa (100-5,000 psig) (7-352 kg/cm²). Average residence times in the reactor is about 3.5 hours. Terpolymer as specified herein is continuously withdrawn from the reactor in solution. A typical process is further described in Example 1.

The following examples are submitted for a better understanding of the invention.

### Example 1

This example describes the synthesis of propylene-butene-1 copolymer in the continuous process. A 25.35 l (6.7-gallon) stirred loop reactor is fed continuously with propylene, butene-1, mineral spirits, and catalyst slurry. Hydrogen is added intermittently at 30-minute intervals to control the viscosity. The copolymer, monomer, and solvent mixture containing catalyst is removed from the reactor continuously to a letdown tank. Unreacted monomers are flashed overhead. The copolymer-solvent mixture is filtered to remove solid catalyst particles, alumina bed treated, and finally stripped to remove solvent.

Reactor conditions and monomer conversion are as shown.

| | |
|---|---|
| Propylene charge | 4.42 lb/hr (2 kg/hr) |
| Butene-1 charge | 4.49 lb/hr (2 kg/hr) |
| Mineral spirits charge | 3.52 lb/hr (1.6 kg/hr) |
| Hydrogen charge | 3.5×10⁻⁴ lb/hr (.00016 kg/hr) |
| Catalyst charge | 5.85×10⁻³ lb/hr (.0027 kg/hr) |
| Catalyst | AA-TiCl₃ Type 1.1 (Stauffer Chemical) |
| Cocatalyst | AIET₃ |
| Cocatalyst/catalyst mole ratio | 0.5/1 |
| Copolymer produced | 7.34 lb/hr (3.33 kg/hr) |
| Propylene conversion | 87 percent |
| Butene-1 conversion | 79 percent |
| Reactor temperature | 171°C |
| Reactor jacket temperature | 158°C |
| Reactor pressure | 7,165 kPa (1,040 psi) (73 kg/cm²) |
| Stirrer speed | 750 rpm |

The propylene-butene-1 copolymer has a viscosity at 190°C of 2.1 Pa · s (2,100 cp) and a RBSP of 94°C. It contains 51.9 weight percent butene-1 incorporated as determined by infrared analysis. The glass transition temperature is -26°C. This example serves as a base point to show the effect of using ethylene to reduce the butene-1 requirement.

### Example 2

The same reactor described in Example 1 is used to prepare a propylene, butene-1, ethylene terpolymer. Target RBSP was 93°C to 95°C. Target viscosity at 190°C is 2 Pa · s (2,000 cp). Reactor conditions and monomer conversion are shown below.

| | |
|---|---|
| Propylene charge | 5.43 lb/hr (2.5 kg/hr) |
| Butene-1 charge | 3.17 lb/hr (1.4 kg/hr) |
| Ethylene charge | 0.17 lb/hr (.077 kg/hr) |
| Hydrogen charge | 8.1×10⁻⁴ lb/hr (.00037 kg/hr) |
| Mineral spirits charge | 3.66 lb/hr (1.7 kg/hr) |
| Catalyst charge | 5.2×10⁻³ lb/hr (.0024 kg/hr) |
| Catalyst | AA-TiCl₃ Type 1.1 (Stauffer Chemical) |
| Cocatalyst | AIET₃ |
| Cocatalyst/catalyst mole ratio | 0.5/1 |
| Reactor temperature | 170°C |
| Reactor jacket temperature | 154°C |
| Stirrer speed | 750 rpm |
| Reactor pressure | 7,166 kPa (1,040 psi) (73 kg/cm²) |
| Propylene conversion | 85 percent |
| Butene-1 conversion | 74 percent |
| Ethylene conversion | 98.6 percent |

Terpolymer is obtained at production rates of 3.14 kg (6.92 pounds) per hour in yields of1,330 kg per kg of TiCl₃. The viscosity is 2.1 Pa · s (2,100 cp) at 190°C and the RBSP is 93°C. The product contains 2.3 percent ethylene based on material balance. It contains 38.4 percent butene-1 by infrared spectrum analysis. The infrared spectrum determined on the solid terpolymer below its melting point shows a singlet at 730 cm⁻¹ showing that the ethylene is incorporated in a highly random fashion. The glass transition temperature is -27°C.

This example shows that incorporation of as little as 2.3 percent ethylene in the terpolymer lowers the butene-1 requirement from about 52 percent in the copolymer to about 38 percent in the terpolymer to achieve the same softening point. This would significantly reduce the manufacturing cost since it represents about 27 percent reduction in the butene-1 requirement.

### Example 3

This example shows the effect of increasing the ethylene content in the terpolymer to 4.5 to 5 percent. The same reactor is used as described in Example 1. Reactor conditions and monomer conversion are as follows.

| | |
|---|---|
| Propylene charge | 5.90 lb/hr (2.7 kg/hr) |
| Butene-1 charge | 2.70 lb/hr (1.2 kg/hr) |
| Ethylene charge | 0.35 lb/hr (.16 kg/hr) |
| Hydrogen charge | 1.38×10⁻³ lb/hr (.00063 kg/hr) |
| Mineral spirits charge | 3.53 lb/hr (1.6 kg/hr) |
| Catalyst charge | 4.06×10⁻³ lb/hr (.0018 kg/hr) |
| Catalyst | AA-TiCl₃ Type 1.1 (Stauffer Chemical) |
| Cocatalyst | AIET₃ |
| Cocatalyst/catalyst mole ratio | 0.5/1 |
| Reactor temperature | 171°C |
| Reactor jacket temperature | 149.5°C |
| Stirrer speed | 750 rpm |
| Reactor pressure | 7,165 kPa (1,040 psi) (73 kg/cm²) |
| Propylene conversion | 87 percent |
| Butene-1 conversion | 76 percent |
| Ethylene conversion | 99.8 percent |

Product is obtained at rates of 2.90 kg (6.4 pounds) per hour. The RBSP is 95°C and the viscosity at 190°C averages 2.03 Pa·s (2,030 cp). The glass transition temperature is -27°C. Based on material balances, 4.6 percent ethylene is incorporated in the terpolymer. Based on infrared spectrum analysis, the terpolymer contains approximately 31 percent polymerized butene-1. The infrared spectrum also shows that ethylene is incorporated in a highly random fashion. Thus, by incorporating only 4.6 percent ethylene in the terpolymer, the butene-1 requirement is reduced from about 52 percent for the copolymer to 31 percent for the terpolymer. This is a 40 percent reduction in the butene-1 requirement and represents a very significant reduction in manufacturing costs.

### Example 4

The reactor used is the same as described in previous examples. Target ethylene content is 10 percent. Target viscosity at 190°C is 2 Pa · s (2,000 cp) and target RBSP is 95°C. Reactor conditions and monomer conversions are as follows.

| | |
|---|---|
| Propylene charge | 6.44 lb/hr (2.9 kg/hr) |
| Butene-1 charge | 1.59 lb/hr (.72 kg/hr) |
| Ethylene charge | 0.66 lb/hr (.30 kg/hr) |
| Hydrogen charge | 2.05×10⁻³ lb/hr (.00093 kg/hr) |
| Mineral spirits charge | 3.49 lb/hr (1.6 kg/hr) |
| Catalyst charge | 2.04×10⁻³ lb/hr (.00093 kg/hr) |
| Catalyst | AA-TiCl₃ Type 1.1 (Stauffer Chemical) |
| Cocatalyst | AIET₃ |
| Cocatalyst/catalyst mole ratio | 0.5/1 |
| Reactor temperature | 171°C |
| Reactor jacket temperature | 153°C |
| Stirrer speed | 750 rpm |
| Reactor pressure | 7,165 kPa (1,040 psi) (73 kg/cm²) |
| Propylene conversion Butene-1 conversion | 77 percent 60 percent |
| Ethylene conversion | 97.8 percent |

Production rates are 2.65 kg (5.84 pounds) per hour at yields of 2,860 kg per kg of TiCl₃. The RBSP is 95°C and the viscosity at 190°C averages 1.975 Pa · s (1,975 cp). The glass transition temperature is -34°C. Based on material balances, the terpolymer contains 9.8 percent ethylene and 14.5 percent butene-1. Based on infrared spectrum analysis the terpolymer contains 15.3 percent butene-1. Even at this ethylene concentration, no evidence of ethylene blocking is observed. Thus increasing the ethylene content from 0 to 9.8 percent reduces the butene-1 requirement from about 52 percent in the copolymer to about 15 percent in the terpolymer to achieve the same RBSP. This represents about a 71 percent reduction in the butene-1 requirement to achieve the same softening point and would significantly lower manufacturing costs.

### Example 5

This example gives the reactor conditions and monomer conversions used to prepare a propylenebutene-1 copolymer and a propylene-butene-1-ethylene terpolymer having a RBSP of 105°C and a melt viscosity at 190°C of approximately 2 Pa·s (2,000 cp).

| | Propylene butene-1 copolymer | Propylene-butene-1 ethylene terpolymer |
|---|---|---|
| Propylene charge, lb/hr | 5.03 (2.3 kg/hr) | 6.01 (2.7 kg/hr) |
| Butene-1 charge, lb/hr | 3.61 (1.6 kg/hr) | 2.49 (1.1 kg/hr) |
| Ethylene charge, Ib/hr | 0 | 0.17 (.077 kg/hr) |
| Hydrogen charge, lb/hr | 13.8×10⁻⁴ (.00063 kg/hr) | 13.8×10⁻⁴ (.00063 kg/hr) |
| Mineral spirits charge, lb/hr | 3.72 (1.7 kg/hr) | 3.57 (1.6 kg/hr) |
| Catalyst charge, lb/hr | 5.77×10⁻³ (.0026 kg/hr) | 4.60×10⁻³ (.0021 kg/hr) |
| Catalyst type | AA-TiCl₃ | AA-TiCl₃ |
| Cocatalyst type | AIET3 | AIET₃ |
| Cocatalyst/catalyst mole ratio | 0.5/1 | 0.5/1 |
| Reactor temperature, °C | 170 | 170 |
| Reactor jacket temperature, °C | 161 | 147 |
| Stirrer speed, rpm | 750 | 750 |
| Reactor pressure, | 7,165 kPa 1,040 psig (73 kg/cm²) | 7,165 kPa 1,040 psig (73 kg/cm²) |
| Propylene conversion, % | 83 | 87 |
| Butene-1 conversion, % | 74 | 80 |
| Ethylene conversion, % | None | >99 |

The propylene-butene-1 copolymer requires approximately 40 percent butene-1 incorporated to obtain a product having a RBSP of 105°C. The terpolymer which contains about 2.5 percent ethylene by material balances across the unit only requires 28 percent butene-1 incorporated to obtain a RBSP of 105°C.

### Example 6

The copolymer and terpolymer prepared in this example have target viscosities of 40-50 Pa · s (40,000 to 50,000 cp) at 190°C. In both cases the target butene-1 content is 40 percent by weight. In the case of the terpolymer ethylene is added so its content in the product would be 2 to 3 percent by weight.

To prepare products having a viscosity this high, it is necessary to eliminate the hydrogen chain-transfer agent and lower the reactor temperature.

Conditions for synthesis of the copolymer and terpolymer and monomer conversion are given below.

| | Propylene-butene-1 copolymer | Propylene-butene-1 ethylene terpolymer |
|---|---|---|
| Propylene charge, lb/hr | 3.058 (1.4 kg/hr) | 3.126 (1.4 kg/hr) |
| Butene-1 charge, lb/hr | 2.253 (1.0 kg/hr) | 2.309 (1.0 kg/hr) |
| Ethylene charge, lb/hr | 0 | 0.09 (0.041 kg/hr) |
| Mineral spirits charge, Ib/hr | 5.537 (2.5 kg/hr) | 5.537 (2.5 kg/hr) |
| Catalyst charge, lb/hr | 1.52×10⁻³ (.00069 kg/hr) | 1.59×10⁻³ (.00072 kg/hr) |
| Catalyst type | AA-TiCl₃ | AA-TiCl₃ |
| Cocatalyst type | AIET₃ | AIET₃ |
| Cocatalyst/catalyst mole ratio | 0.5/1 | 0.5/1 |
| Reactor temperature °C | 155 | 153 |
| Reactor jacket temperature, °C | 147 | 144 |
| Stirrer speed, rpm | 750 | 750 |
| Reactor pressure, | 7,165 kPa 1,040 psig (73 kg/cm²) | 7,165 kPa 1,040 psig (73 kg/cm²) |
| Propylene conversion, % | 72 | 73.3 |
| Butene-1 conversion, % | 61 | 62.7 |
| Ethylene conversion, % | None | 97.9 |

By material balances, the terpolymer contains 59.9 propylene, 37.8 percent butene, and 2.3 percent ethylene. It has a melt viscosity at 190°C of 44.5 Pa · s (44,500 cp) and a RBSP of 103°C.

The propylene-butene copolymer contains about 38 percent butene-1 and 62 percent propylene. It has a melt viscosity of 43 Pa · s (43,000 cp) and had a RBSP of 113°C.

Thus, incorporation of as little as 2.3 percent ethylene in the material lowers the RBSP about 10°C.

### Example 7

This example shows the effect of incorporating about 5 percent ethylene into a propylene-butene-1-ethylene terpolymer on RBSP. It is compared to a propylene-butene-1 copolymer. Both materials are high viscosity products.

| | Propylene-butene-1 copolymer | Propylene-butene-1 ethylene terpolymer |
|---|---|---|
| Propylene charge, lb/hr | 3.190 (1.4 kg/hr) | 3.126 (1.4 kg/hr) |
| Butene-1 charge, lb/hr | 2.384 (1.1 kg/hr) | 2.434 (1.1 kg/hr) |
| Ethylene charge, lb/hr | 0 | 0.24 (0.11 kg/hr) |
| Mineral spirits charge, lb/hr | 6.010 (2.7 kg/hr) | 5.537 (2.5 kg/hr) |
| Catalyst charge, Ib/hr | 1.26×10⁻³ (.00057 kg/hr) | 1.26×10⁻³ (.00057 kg/hr) |
| Catalyst type | AA-TiCl₃ | AA-TiCl₃ |
| Cocatalyst type | AIET₃ | AIET₃ |
| Cocatalyst/catalyst mole ratio | 0.5/1 | 0.5/1 |
| Reactor temperature, °C | 148 | 146 |
| Reactor jacket temperature, °C | 134 | 129 |
| Stirrer speed, rpm | 750 | 750 |
| Reactor pressure | 7,165 kPa 1,040 psig (73 kg/cm²) | 7,165 kPa 1,040 psig (73 kg/cm²) |
| Propylene conversion % | 73 | 76.1 |
| Butene-1 conversion, % | 65 | 69.3 |
| Ethylene conversion, % | None | 99.3 |

The propylene-butene-1 copolmer has a viscosity at 190°C of 66 Pa·s(66,000 cp) and a RBSP of 115°C. By infrared spectrum analysis it contains 39.3 percent polymerized butene-1.

The propylene-butene-1 -ethylene terpolymer has a melt viscosity of 62.4 Pa · s (62,400 cp) at 190°C and an RBSP of 94°C. From material balance calculations, the terpolymer contains 39.2 percent polymerized butene-1 and 5.5 percent polymerized ethylene. The ethylene is incorporated in a highly random manner.

Thus this example shows that increasing the ethylene content from 0 percent in the copolymer to 5.5 percent in the terpolymer results in a decrease in RBSP of 21°C from 115°C to 94°C.

The following is a description of the test methods used in this specification:
RBSP, °C-ASTM E-28

Infrared Spectrum Analysis-The spectrum is recorded on a Nicolet 6000 FTIR using the sample preparation described as follows:

In the infrared spectrum of crystalline polyethylene a methylene rocking doublet is observed in the 74%-710 cm⁻¹ region. The 730 cm⁻¹ component of this doublet is associated with linear methylene groups in the crystalline regions of the polymer and the 720 cm⁻¹ component is due to those in the amorphous phase. Consequently polyethylene or a copolymer containing polyethylene whose infrared spectrum exhibits only a single band in the 74-720 cm⁻¹ region is non-crystalline polyethylene.

### Sample preparation:

Place a small amount (Ca50 Mg) of sample on a salt disc and heat until melted. Place a heated salt disc on top of the sample and press down to leave a capillary film. Allow the sample to cool to room temperature before recording the infrared spectrum.

Observe a 740-710 cm⁻¹ region of the spectrum to determine the presence or absence of crystalline polyethylene.

Glass Transition Temperature, Tg-Determined on a differential scanning calorimeter using ASTM Procedure D-3418.

Unless otherwise specified, all parts, percentages, ratios, etc., are by weight.

The invention has been described in detail with particular reference to preferred embodiments thereof, but it will be understood that variations and modifications can be effected within the spirit and scope of the invention.

## Claims

1. A process for producing a highly amorphous olefin terpolymer comprising repeating units from about 0.1-10 % by weight ethylene, about 50-78 % by weight propylene and about 12-63 % by weight butene-1, said terpolymer showing a singlet at about 730 cm⁻¹, when examined in the solid state by infrared spectrum analysis, being greater than 99 percent soluble in boiling hexane, having a melt viscosity when measured by the Thermosel method of about 0.1 to about 100 Pa·s (100 to about 100,000 cp) at 190°C, a ring and ball softening point of about 75°C to about 120°C and a glass transition temperature of about -20°C to about -35°C,
comprising continuously polymerizing a mixture of about 0.1-10 % by weight ethylene, about 50-78 % by weight propylene and about 12-63 % by weight butene-1, in the presence of a catalyst comprising an anionic coordination catalyst and in a solvent medium, at a temperature of about 140°C-250°C and at a pressure of about 689-34,450 kPa (100-5,000 psig) (7-351.6 kg/cm²).

2. A process according to claim 1 wherein said temperature is about 150°C-180°C and the pressure is about 5,170-12,790 kPa (750-2,000 psig) (53-140.6 kg/cm²).

## Patentansprüche

1. Verfahren zur Herstellung eines hochamorphen Olefin-Terpolymeren mit wiederkehrenden Einheiten aus etwa 0,1-10 Gew.-% Ethylen, etwa 50-78 Gew.-% Propylen und etwa 12-63 Gew.-% Buten-1, das Terpolymer zeigt ein Singlet bei etwa 730 cm⁻¹ bei Prüfung im festen Zustand durch Infrarot-Spektralanalyse und ist zu mehr als 99 % in siedendem Hexan löslich, mit einer Schmelzviskosität, gemessen nach der Thermosel-Methode, von etwa 0,1 bis etwa 100 Pa·s (100 bis etwa 100 000 cp) bei 190°C, einem Erweichungspunkt nach der Ring- und Kugelmethode von etwa 75°C bis etwa 120°C und einer Glasübergangstemperatur von etwa -20°C bis etwa-35°C, bei dem man eine Mischung aus etwa 0,1-10 Gew.-% Ethylen, etwa 50-78 Gew.-% Propylen und etwa 12-63 Gew.-% Buten-1 kontinuierlich in Gegenwart eines Katalysators, der einen anionischen Koordinationskatalysator umfaßt, in einem Lösungsmittelmedium bei einer Temperatur von etwa 140°C-250°C sowie bei einem Druck von etwa 689-34 450 kPa (100-5000 psig) (7-351,6 kg/cm²) polymerisiert.

2. Verfahren nach Anspruch 1, worin die Temperatur etwa 150°C-180°C ist und der Druck ist etwa 5170-12 790 kPa (750-2000 psig) (53-140,6 kg/cm²).

## Revendications

1. Procédé pour produire un terpolymère d'oléfine très amorphe comprenant des motifs récurrents constitués d'environ 0,1 à 10 % en poids d'éthylène, d'environ 50 - 78 % en poids de propylène et d'environ 12 - 63 % en poids de 1-butène, ledit terpolymère présentant un singulet à environ 730 cm⁻¹, quand on l'examine à l'état solide par analyse spectrale infrarouge, étant soluble à plus de 99 % dans l'hexane bouillant, ayant une viscosité à l'état fondu mesurée par la méthode Thermosel d'environ 0,1 à environ 100 Pa·s (100 à environ 100.000 cp) à 190 °C, un point de ramollissement Ring and Ball compris entre environ 75 °C et environ 120 °C et une température de transition vitreuse comprise entre environ -20 °C et environ -35 °C,
consistant à polymériser en continu un mélange comprenant environ 0,1 - 10 % en poids d'éthylène, environ 50 à 78 % en poids de propylène et environ 12 à 63 % en poids de 1-butène en présence d'un catalyseur comprenant un catalyseur de coordination anionique et en un milieu solvant, à une température d'environ 140 °C - 250 °C et une pression d'environ 689 - 34.450 kPa (100 - 5.000 psig) (7 - 351,6 kg/cm²).

2. Procédé selon la revendication 1, dans lequel ladite température est d'environ 150 °C - 180 °C et la pression est d'environ 5.170 - 12.790 kPa (750 - 2.000 psig) (53 - 140,6 kg/cm²).
